# EUROPEAN PATENT SPECIFICATION

(11) **EP 3 241 744 B1**
(45) Date of publication and mention of the grant of the patent: **19.12.2018**
(21) Application number: 16752174.9
(22) Date of filing: 14.01.2016
(51) Int. Cl.: B64C 25/26, B64C 25/22, B64C 25/24, F15B 11/028, F15B 11/04

(54) **ELECTRO-HYDROSTATIC ACTUATOR SYSTEM FOR RAISING AND LOWERING AIRCRAFT LANDING GEAR**
ELEKTROHYDROSTATISCHES AKTUATORSYSTEM ZUM HEBEN UND SENKEN EINES FLUGZEUGFAHRWERKS
SYSTÈME D'ACTIONNEUR ÉLECTRO-HYDROSTATIQUE DESTINÉ À LEVER ET ABAISSER UN TRAIN D'ATTERRISSAGE D'AÉRONEF

(30) Priority: 17.02.2015 JP 2015028291
(43) Date of publication of application: 08.11.2017
(73) Proprietor: Sumitomo Precision Products Co., Ltd., Amagasaki-shi, Hyogo 660-0891 (JP)
(72) Inventor: HAGIHARA, Shogo, Amagasaki-shi Hyogo 660-0891 (JP)
(74) Representative: BRP Renaud & Partner mbB Rechtsanwälte Patentanwälte Steuerberater
(86) International application number: PCT/JP2016/051041
(87) International publication number: WO 2016/132785

(56) References cited:
- EP-A1- 1 793 127
- EP-A1- 2 767 720
- DE-A1-102013 012 812
- JP-A- H0 988 839
- JP-A- 2001 263 254
- JP-A- 2011 102 604
- JP-A- 2014 132 189
- US-A1- 2005 082 427
- US-A1- 2010 058 752
- US-A1- 2011 256 000
- US-A1- 2013 082 149
- US-A1- 2015 267 769

## Description

### TECHNICAL FIELD

The technique disclosed herein relates to an electro-hydrostatic actuator system for raising/lowering the landing gear of an aircraft.

### BACKGROUND ART

Patent Document 1 teaches an electro-hydrostatic actuator (EHA) system for raising/lowering the landing gear of an aircraft. This system includes a hydraulic actuator, a hydraulic circuit, a hydraulic pump, an electric motor, and a controller. The controller controls the operation of the electric motor, thereby allowing the hydraulic pump to supply the hydraulic actuator with operation oil through the hydraulic circuit. The hydraulic actuator performs an extension or retraction operation, thereby allowing the landing gear to be stored in a landing gear bay or to extend from the landing gear bay. The controller feeds back the rotational speed of the electric motor and a current supplied to the electric motor, and controls the operation of the electric motor such that the rotational speed of the electric motor reaches a target rotational speed.

### CITATION LIST

### PATENT DOCUMENTS

Patent Document 1: Japanese Patent No. 5606044

### SUMMARY OF THE INVENTION

### TECHNICAL PROBLEM

When the landing gear of an aircraft is raised or lowered, the landing gear has to be retracted and extended within a predetermined range of time, and time-consuming retraction/extension of the landing gear should be avoided.

The present inventor found that, in an EHA system for raising/lowering a landing gear as taught in Patent Document 1, performing a rotational speed feedback control of an electric motor significantly varies a time taken to retract the landing gear, and a time taken to extend the landing gear depending on the environment where the aircraft is used. The present inventor also found that, in some cases, the pressure in the hydraulic actuator becomes too high.

In view of these problems, the technique disclosed herein attempts to, in an electro-hydrostatic actuator system for raising/lowering the landing gear of an aircraft, reduce variation of the operation of a hydraulic actuator due to environmental change.

### SOLUTION TO THE PROBLEM

An aircraft may take off from a high-temperature area such as an area at a temperature exceeding 50°C, and land on a low-temperature area such as an area at a temperature less than or equal to -10°C. Conversely, the aircraft may take off from a low-temperature area, and land on a high-temperature area. Thus, the EHA system mounted in the aircraft is used in a significantly wide range of temperature, compared with generally used hydraulic equipment. In the EHA system mounted in the aircraft, the viscosity of the operation oil significantly varies from a low value to a high value due to a wide range of temperature for use.

The present inventor found the following facts by investigation. That is to say, if a significant decrease in temperature of operation oil causes an increase in viscosity of the operation oil, leakage of the operation oil in the hydraulic pump is decreased. As a result, this increases the discharge rate of the hydraulic pump as compared to a case where the viscosity is high. If only the feedback control of the rotational speed of an electric motor is performed like the EHA system taught in Patent Document 1, the discharge rate of the hydraulic pump is increased too much in a situation where the temperature is extremely low. As a result, the pressure in the hydraulic actuator may be too high in some cases.

Conversely, if a significant increase in temperature of operation oil causes a decrease in viscosity of the operation oil, leakage of the operation oil in the hydraulic pump is increased. As a result, this decreases the discharge rate of the hydraulic pump as compared to a case where the viscosity is low. If only the feedback control of the rotational speed of the electric motor is performed, the extension and retraction operations of the actuator are slow in a situation where the temperature is extremely high. As a result, in an EHA system for raising/lowering the landing gear of an aircraft taught in Patent Document 1, a time taken to retract the landing gear and a time taken to extend the landing gear significantly vary depending on the temperature environment.

A mechanism of raising/lowering the landing gear of an aircraft is used only during takeoff and landing, and is not used during a flight in which the aircraft is exposed to an extremely low-temperature environment. The EHA system is a system to allow individual systems to independently operate hydraulic actuators instead of a hydraulic supply system installed in an ongoing aircraft. Accordingly, if the EHA system is applied to the mechanism of raising/lowering the landing gear of an aircraft, the EHA system is stopped during a flight, and thus, the temperature of the operation oil is significantly decreased in a situation where the EHA system for raising/lowering the landing gear is operated at the time of landing. The EHA system itself may be applied to various types of systems in an aircraft. In particular, if the EHA system is applied to the mechanism of raising/lowering a landing gear, the temperature of the operation oil is extremely low during the operation, which is a unique circumstance.

Furthermore, in the mechanism of raising/lowering the landing gear, an aerodynamic load along with the operation condition of an aircraft is applied to the landing gear and a door, and finally to hydraulic actuators driving such parts. The direction or magnitude of the aerodynamic load varies according to the wind power in the outside and the speed of advance of the aircraft. This is also one cause that causes an operation variation of the hydraulic actuator when only the rotational speed feedback control of the electric motor is performed in the EHA system for raising/lowering the landing gear. Document DE102013012812 discloses an EHA system for a landing gear, comprising a hydraulic actuator, a hydraulic pump working in a hydraulic circuit, an electric motor, a controller and a sensor for detecting a discharge pressure at the hydraulic pump. The controller feeds back the pressure detected by the sensor and controls the electric motor. Document EP1793127 discloses a fluid pressure unit comprising the same features as above, further adjusting the speed or the current applied to the motor based on an increase in the discharge line pressure.

The present inventor has developed the technique disclosed herein by discovering the above-described novel problem that is peculiar to an EHA system for raising/lowering the landing gear of an aircraft. Specifically, the invention disclosed herein is directed to an electro-hydrostatic actuator system according to claim 1, for raising/lowering the landing gear of an aircraft.

Here, the hydraulic actuator configured to perform retraction/extension of the landing gear of an aircraft includes a hydraulic actuator (so-called, a gear actuator) raising/lowering the landing gear, and/or a hydraulic actuator (so-called, a door actuator) opening/closing a door of a landing gear bay for storing the landing gear. The hydraulic actuator may also include a hydraulic actuator (so-called a down-lock release actuator) for releasing a mechanism for maintaining a landing gear down state.

According to this configuration, the controller drives the electric motor to allow the hydraulic pump to drive. The operation oil discharged from the hydraulic pump is supplied to the hydraulic actuator through the hydraulic circuit. This allows the hydraulic actuator to perform an extension or retraction operation, thereby allowing the landing gear to be stored in the landing gear bay or to extend from the landing gear bay.

The controller, when receiving the command regarding retraction of the landing gear or the command regarding extension of the landing gear, feeds back the discharge pressure detected by the sensor, and controls the operation of the electric motor such that the discharge pressure of the hydraulic pump reaches a target discharge pressure. In this way, the discharge pressure feedback control of the hydraulic pump keeps the discharge pressure of the hydraulic pump identical with the target discharge pressure regardless of high or low viscosity of the operation oil, in other words, regardless of the leakage condition of the operation oil in the hydraulic pump. The controller, when the discharge pressure of the hydraulic pump is lower than the target discharge pressure, increases the rotational speed of the electric motor, and when the discharge pressure of the hydraulic pump is higher than the target discharge pressure, reduces the rotational speed of the electric motor. In this way, the pressure of the operation oil supplied to the hydraulic actuator is kept identical with the predetermined pressure. This prevents the pressure in the hydraulic actuator from being too high.

Also, this configuration prevents the variation of the time taken to retract the landing gear and the variation of the time taken to extend the landing gear due to high or low viscosity of the operation oil. This allows the time taken to retract the landing gear and the time taken to extend the landing gear to be within a predetermined range of time.

The controller may include: a pressure control block receiving a pressure command of the operation oil to be supplied to the hydraulic actuator, and a feedback signal of the discharge pressure detected by the sensor to output a rotational speed command of the electric motor such that the discharge pressure of the hydraulic pump reaches a target discharge pressure associated with the pressure command; a motor rotational speed control block receiving the rotational speed command from the pressure control block, and a rotational speed feedback signal of the electric motor to output a supply current command of the electric motor such that the rotational speed of the electric motor reaches a target rotational speed associated with the rotational speed command; and a current control block receiving the supply current command from the motor rotational speed control block, and a supply current feedback signal to the electric motor to supply the electric motor with a current such that the current reaches a target supply current associated with the supply current command.

This configuration corresponds to performing a feedback control based on the discharge pressure of the hydraulic pump on the electro-hydrostatic actuator for raising/lowering the landing gear of the aircraft, the system performing a feedback control based on the rotational speed of the electric motor and the supply current value. This configuration prevents the pressure in the hydraulic actuator from being too high, as described above. Also, this configuration prevents the variation of the time taken to retract the landing gear and the variation of the time taken to extend the landing gear due to high or low viscosity of the operation oil. This allows the time taken to retract or extend the landing gear to be within a predetermined range of time.

### ADVANTAGES OF THE INVENTION

As described above, the electro-hydrostatic actuator system for raising/lowering the landing gear of an aircraft performs a feedback control based on the discharge pressure of the hydraulic pump to prevent the pressure in the hydraulic actuator from being too high. On top of that, this mechanism of raising/lowering of the landing gear of an aircraft prevents variations of the extension and retraction operations of the hydraulic actuator.

### BRIEF DESCRIPTION OF THE DRAWINGS

[FIG. 1] FIG. 1 is a perspective view illustrating a mechanism for extending/retracting a landing gear.
[FIG. 2] FIG. 2 is a block diagram showing a configuration of the EHA system for raising/lowering the landing gear.
[FIG. 3] FIG. 3 is a diagram showing a comparison between a retraction operation of the landing gear in a comparative example and a retraction operation of the landing gear in an example when operation oil is at an ordinary temperature (20°C).
[FIG. 4] FIG. 4 is a diagram showing a comparison between a retraction operation of the landing gear in a comparative example and a retraction operation of the landing gear in an example when operation oil is at a high temperature (70°C).
[FIG. 5] FIG. 5 is a diagram showing a comparison between a retraction operation of the landing gear in a comparative example and a retraction operation of the landing gear in an example when operation oil is at a low temperature (-55°C).

### DESCRIPTION OF EMBODIMENTS

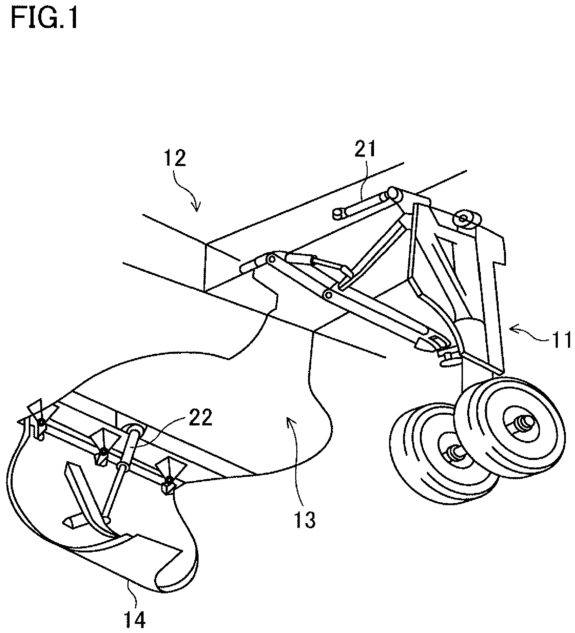

An embodiment of the electro-hydrostatic actuator (EHA) system for raising/lowering the landing gear of an aircraft will now be described with reference to the drawings. The EHA system described here is an example. FIG. 1 illustrates a landing gear raising/lowering mechanism to which an EHA system 1 is applied. It is assumed here that the raising/lowering mechanism retracting a landing gear 11 into an aircraft body 12 and extending the landing gear 11 from the aircraft body 12 includes at least a gear actuator 21 raising/lowering the landing gear 11, and a door actuator 22 opening/closing a door 14 of a landing gear bay 13 storing the landing gear 11. These actuators 21 and 22 sequentially operate in retraction/extension of the landing gear 11. Specifically, when the landing gear 11 is retracted, the door actuator 22 opens the door 14, and then, the gear actuator 21 raises the landing gear 11. After the landing gear 11 is retracted into the landing gear bay 13, the door actuator 22 closes the door 14. In this way, a sequence of operations of retracting the landing gear 11 is completed. When the landing gear 11 is extended, the door actuator 22 opens the door 14, and then, the gear actuator 21 lowers the landing gear 11. After the landing gear 11 is extended, the door actuator 22 closes the door 14. The landing gear raising/lowering mechanism may further include a down-lock release actuator for releasing a mechanism for maintaining a landing gear down state.

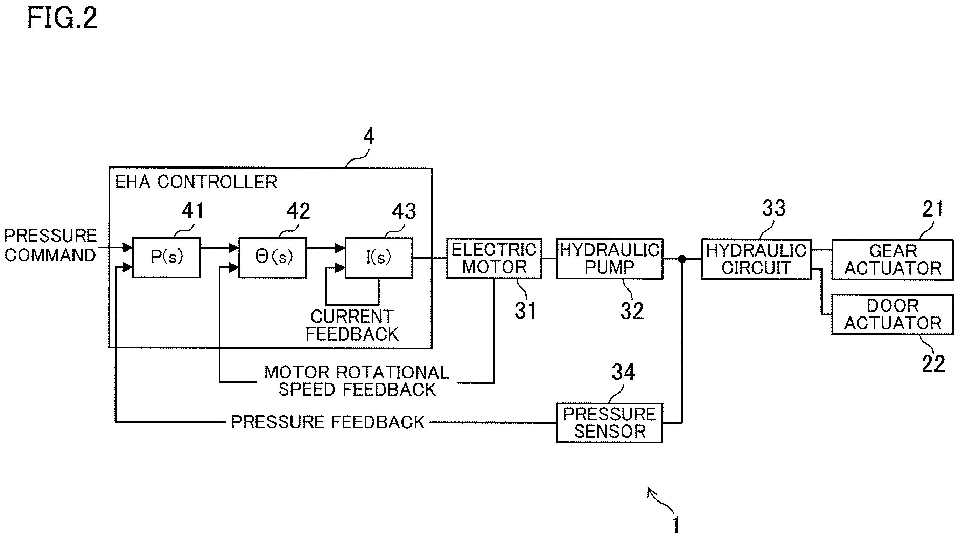

FIG. 2 is a block diagram illustrating the configuration of the EHA system 1. The EHA system 1 includes: the gear actuator 21; the door actuator 22; a hydraulic circuit 33 connected to the gear actuator 21 and the door actuator 22; a hydraulic pump 32 supplying operation oil to the gear actuator 21 and the door actuator 22 through the hydraulic circuit 33; an electric motor 31 connected to the hydraulic pump 32; an EHA controller 4 controlling the operation of the electric motor 31; and a pressure sensor 34 detecting the discharge pressure of the hydraulic pump 32.

The hydraulic circuit 33 is configured to selectively supply the gear actuator 21 or the door actuator 22 with the operation oil supplied from the hydraulic pump 32. The hydraulic circuit 33 is also configured to exhaust the operation oil from the gear actuator 21 and the door actuator 22. The specific configuration of the hydraulic circuit 33 is not particularly limited, and can have various configurations as appropriate.

The hydraulic pump 32 is configured to raise the pressure of the operation oil to be supplied to the gear actuator 21 and the door actuator 22. The hydraulic pump 32 may be a fixed-capacity hydraulic pump. Specifically, examples of the pump may include a swash plate-type or bent-axis type piston pump, a gear pump, a screw pump, and a vane pump. The hydraulic pump 32 may be a variable-capacity hydraulic pump.

The electric motor 31 is connected to the hydraulic pump 32 and is configured to drive the hydraulic pump 32. The electric motor 31 may be, e.g., a three-phase motor. The EHA controller 4 controls the operation of the electric motor 31, thereby controlling the drive of the hydraulic pump 32, which will be described later.

The pressure sensor 34 detects the discharge pressure of the hydraulic pump 32. The pressure sensor 34 can have arbitrary configurations as appropriate. The pressure sensor 34 outputs the discharge pressure detected as a feedback signal to the EHA controller 4.

The EHA controller 4 includes a pressure control block 41, a motor rotational speed control block 42, and a current control block 43.

The pressure control block 41 is configured to receive a pressure command output from a system of the aircraft body, and a discharge pressure feedback signal from the pressure sensor 34. The pressure command corresponds to the pressure of the operation oil to be supplied to each of the gear actuator 21 and the door actuator 22 sequentially operating in the retraction/extension of the landing gear 11. The pressure control block 41 outputs a rotational speed command of the electric motor 31 by, e.g., a proportional-integral (PI) control such that the discharge pressure of the hydraulic pump 32 reaches a target discharge pressure based on the pressure command.

The motor rotational speed control block 42 is configured to receive the rotational speed command from the pressure control block 41, and the rotational speed of the electric motor 31 as a feedback signal. The motor rotational speed control block 42 outputs a supply current command of the electric motor 31 by, e.g., a PI control such that the rotational speed of the electric motor 31 reaches a target rotational speed based on the rotational speed command.

The current control block 43 is configured to receive the supply current command from the motor rotational speed control block 42, and a value of a supply current to the electric motor 31 as a feedback signal. The pressure control block 43 supplies the electric motor 31 with a current by, e.g., a PI control such that the current reaches a target supply current based on the supply current command.

In this way, the EHA controller 4 includes three feedback loops, namely, a pressure feedback loop based on the discharge pressure of the hydraulic pump 32, a motor rotational speed feedback loop based on the rotational speed of the electric motor 31, and a current feedback loop based on the supply current of the electric motor 31.

According to the EHA system 1 having such a configuration, if the EHA controller 4 receives the pressure command regarding the retraction/extension of the landing gear 11 from the system in the aircraft body, the electric motor 31 is controlled such that the discharge pressure of the hydraulic pump 32 reaches the target discharge pressure. That is to say, the EHA controller 4 decreases the rotational speed of the electric motor 31 if the discharge pressure of the hydraulic pump 32 is higher than the target discharge pressure, and increases the rotational speed of the electric motor 31 if the discharge pressure of the hydraulic pump 32 is lower than the target discharge pressure.

When the temperature drop of the operation oil due to an extremely low temperature of its vicinity increases the viscosity thereof, the discharge pressure of the hydraulic pump 32 becomes too high though the leakage of the operation oil is reduced. The pressure feedback control regarding the discharge pressure of the hydraulic pump 32 prevents such too high discharge pressure of the hydraulic pump 32. In particular, during an aircraft flight in which the aircraft is exposed to an extremely low-temperature environment, the EHA system 1 for raising/lowering the landing gear is stopped, and the temperature of the operation oil is significantly decreased. Thus, there may be a situation where the landing gear 11 has to be extended during landing with the temperature of the operation oil significantly decreased. Even in such a case, the discharge pressure of the hydraulic pump 32 can be prevented from being too high. This prevents the pressure of the gear actuator 21 and the pressure of the door actuator 22 from being too high beforehand.

Conversely, even when the temperature rise of the operation oil due to a high temperature of its vicinity decreases the viscosity thereof, and increases the leakage of the operation oil in the hydraulic pump 32, the discharge pressure of the hydraulic pump 32 can be kept identical with the target discharge pressure. In this way, regardless of the high or low temperature of the operation oil, the discharge pressure of the hydraulic pump 32 can be kept identical with the target discharge pressure. This prevents variations of the retraction and extension operations of the gear actuator 21 and the door actuator 22.

Furthermore, in the mechanism of raising/lowering the landing gear 11, an aerodynamic load along with the operation condition of an aircraft is applied to the landing gear 11 and the door 14. The direction or magnitude of the aerodynamic load applied to the gear actuator 21 and the door actuator 22 driving the landing gear 11 and the door 14 varies according to the wind power in the outside and the speed of advance of the aircraft. As described above, the discharge pressure feedback control allows the discharge pressure of the hydraulic pump 32 to be kept identical with the target discharge pressure, thereby stably operating the gear actuator 21 and the door actuator 22 regardless of the direction or magnitude of the aerodynamic load applied to the gear actuator 21 and the door actuator 22. This prevents variations of the operations of the gear actuator 21 and the door actuator 22.

In this way, performing the feedback control of the rotational speed of the electric motor 31 and the supply current feedback control to the electric motor 31 in addition to the discharge pressure feedback control can further reduce the variations of the operations of the gear actuator 21 and the door actuator 22. This allows the time taken to retract the landing gear 11 and the time taken to extend the landing gear 11 to be within a predetermined range of time.

In this way, according to the above configuration, the EHA controller 4 includes the three feedback loops, namely, the pressure feedback loop, the motor rotational speed feedback loop, and the current feedback loop. Regarding the rotational speed control of the electric motor 31, a feedforward control may be adopted. If this configuration is adopted, the motor rotational speed feedback loop and the current feedback loop are omitted in FIG. 2.

### Examples

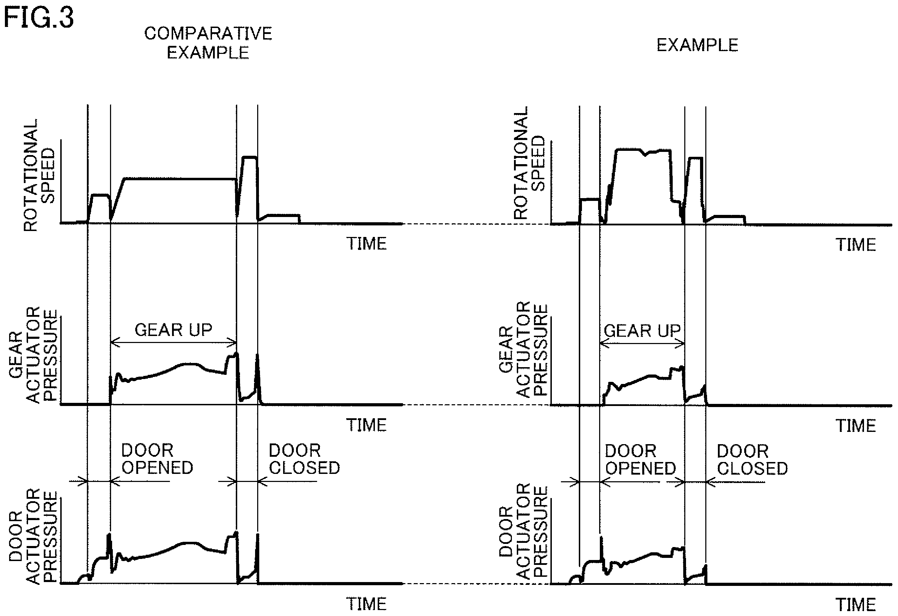

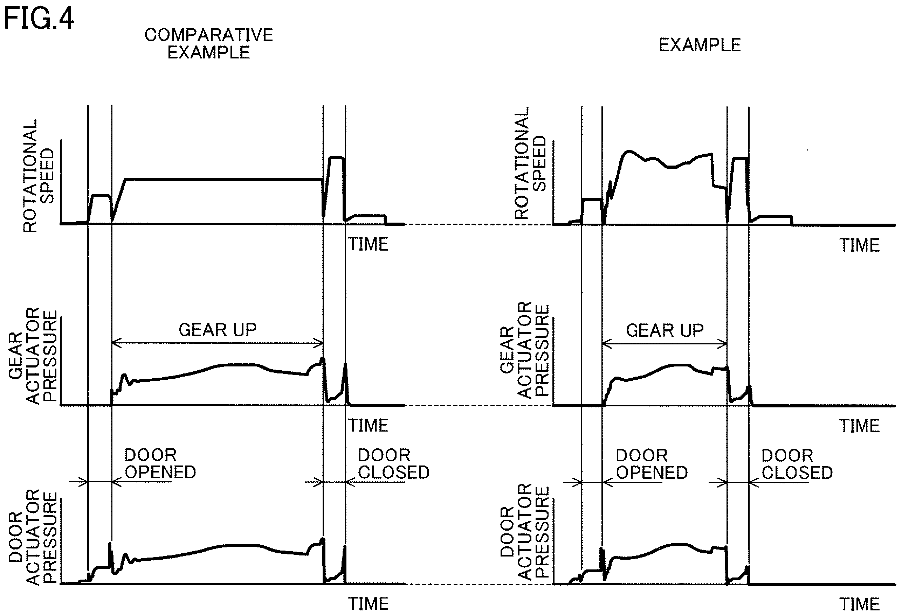

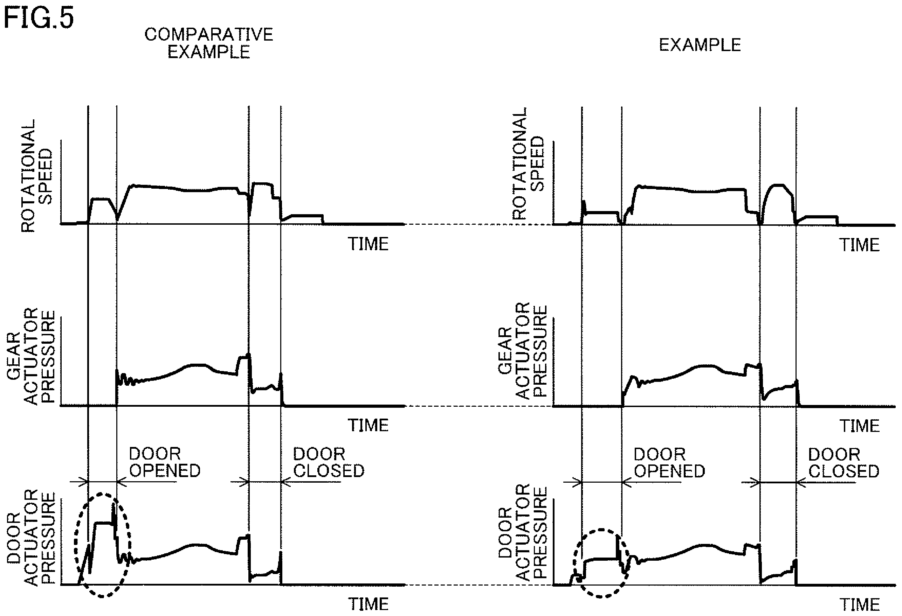

Next, examples of the EHA system 1 for raising/lowering the landing gear of an aircraft will be described. FIGS. 3-5 show simulation results regarding the retraction operation of the landing gear 11 in the EHA system 1 for raising/lowering a landing gear. FIG. 3 is a simulation result when the temperature of the operation oil is 20°C, FIG. 4 is a simulation result when the temperature of the operation oil is 70°C, and FIG. 5 is a simulation result when the temperature of the operation oil is -55°C. The diagram on the left-hand side of each of FIGS. 3-5 shows a comparative example, and shows how the motor rotational speed changes (top), how the pressure of the bore chamber of the gear actuator 21 changes (middle), and how the pressure of the annulus chamber of the door actuator 22 changes (bottom) if the EHA controller 4 includes the motor rotational speed feedback loop and the current feedback loop and does not include the pressure feedback loop. The diagram on the right hand side of each of FIGS. 3-5 shows an example, and shows, if the EHA controller 4 includes the motor rotational speed feedback loop, the current feedback loop, and the pressure feedback loop (see FIG. 2), how the motor rotational speed changes (top), how the pressure of the bore chamber of the gear actuator 21 changes (middle), and how the pressure of the annulus chamber of the door actuator 22 changes (bottom).

As described above, when the landing gear 11 is retracted, the operation in which the door actuator 22 opens the door 14 (door opened), the operation in which the gear actuator 21 raises the landing gear 11 (gear up), and the operation in which the door actuator 22 closes the door 14 (door closed) are sequentially performed. The EHA controller 4 receives commands associated with respective operations.

First, the comparative examples shown in FIGS. 3-5 are compared with one another. In the comparative examples, the motor rotational speed feedback control is performed, as described above. In the door open operation, the EHA controller 4 receives a motor rotational speed command associated with the operation of the door actuator 22, and controls the electric motor 31 such that the rotational speed of the electric motor 31 reaches a target motor rotational speed associated with the motor rotational speed command. When the operation oil is at an ordinary temperature, the motor rotational speed is substantially constant during the door open operation, as shown in the top left view of FIG. 3. As shown in the bottom left view of FIG. 3, the operation oil is supplied from the hydraulic pump 32 to increase the pressure in the door actuator 22.

Likewise, in the gear up operation following the door open operation, the EHA controller 4 receives a motor rotational speed command associated with the operation of the gear actuator 21, and controls the electric motor 31 such that the rotational speed of the electric motor 31 reaches a target motor rotational speed associated with the motor rotational speed command. As shown in the top left view of FIG. 3, the motor rotational speed is substantially constant though it is different from that in the door open operation. As shown in the middle left view of FIG. 3, the operation oil is supplied from the hydraulic pump 32 to increase the pressure in the gear actuator 21.

Subsequently, likewise, in the door close operation, the EHA controller 4 receives a motor rotational speed command associated with the operation of the door actuator 22, and controls the electric motor 31 such that the rotational speed of the electric motor 31 reaches a target motor rotational speed associated with the motor rotational speed command. As shown in the top left view of FIG. 3, the motor rotational speed is substantially constant though it is different from that in the door open operation and that in the gear up operation. As shown in the bottom left view of FIG. 3, the pressure of the annulus chamber of the door actuator 22 is decreased.

In this way, a sequence of the operations, namely, the door open, the gear up, and the door close operations is performed to allow the landing gear 11 to be retracted within the predetermined range of time.

In contrast, as shown on the left-hand side of FIG. 4, when the operation oil is at a high temperature, the EHA controller 4 also receives a motor rotational speed command in each operation, namely, the door open, the gear up, and the door close operations, and controls the electric motor 31 such that the rotational speed of the electric motor 31 reaches a target motor rotational speed associated with each of the commands. The temperature of the operation oil is high, and thus, the viscosity thereof is low. This increases the leakage of the operation oil in the hydraulic pump 32, thereby lowering the discharge rate of the hydraulic pump 32, compared with the discharge rate at the ordinary temperature. This increases the time taken to perform the gear up operation, compared with that at the ordinary temperature. This is remarkable in the gear up operation shown in the middle left view of FIG. 4. As a result, in the comparative examples in which the rotational speed feedback control of the electric motor 31 is performed, the time taken to retract the landing gear 11 including the door open, the gear up, and the door close operations are significantly longer than that at the ordinary temperature.

As shown on the left-hand side of FIG. 5, when the temperature of the operation oil is low, the viscosity thereof is increased. This reduces the leakage of the operation oil in the hydraulic pump 32, thereby increasing the discharge rate of the hydraulic pump 32, compared with the discharge rate at the ordinary temperature. This allows the operation oil to be excessively supplied to the door actuator 22, thereby significantly increasing the pressure in the door actuator 22. This is remarkable in the door open operation in the bottom left view of FIG. 5 (see a portion surrounded by the dotted line).

As shown in the top left view of FIG. 5, when the temperature of the operation oil is low, unlike the case where the operation oil is at the ordinary temperature (left view of FIG. 3), and the case where the operation oil is at a high temperature (left view of FIG. 4), the rotational speed of the electric motor 31 is not constant and is temporarily lowered during the gear up operation. That is because, when the energy supplied to the electric motor 31 exceeds the set upper limit value, a torque limit control decreasing the rotational speed is performed in addition to the rotational speed feedback control of the electric motor 31. As a result, the time taken to retract the landing gear 11 when the operation oil is at a low temperature is longer than that when the operation oil is at the ordinary temperature.

In contrast to such comparative examples, the discharge pressure feedback control of the hydraulic pump 32 is performed in the examples. In each of the door open, the gear up, and the door close operation, the EHA controller 4 receives pressure commands associated with the respective operations of the door actuator 22 and the gear actuator 21. The EHA controller 4 controls the electric motor 31 such that the pressure reaches a target discharge pressure associated with each of the pressure commands. That is to say, the rotational speed of the electric motor 31 is increased when the discharge pressure of the hydraulic pump 32 is low, and the rotational speed of the electric motor 31 is decreased when the discharge pressure of the hydraulic pump 32 is high. This allows the rotational speed of the electric motor 31 to vary during each operation, not to be constant, as shown in the top right views of FIGS. 3-5.

As it is clear from a comparison between right views of FIG. 3 and right views of FIG. 4, when the temperature of the operation oil is high and the viscosity thereof is low, the rotational speed of the electric motor 31 is set to high since a large amount of the operation oil is leaked from the hydraulic pump 32. This supplies the door actuator 22 and the gear actuator 21 with necessary and sufficient operation oil. In particular, as shown in the middle right view of FIG. 4, the time taken to perform the gear up operation is more significantly reduced than that in the conventional example. As a result, the example in which the discharge pressure feedback control of the hydraulic pump 32 is performed prevents the time taken to retract the landing gear 11 including the door open, the gear up, and the door close operations from being significantly longer than that at the ordinary temperature. That is to say, the examples can reduce the variation of the time taken to retract the landing gear 11.

When the temperature of the operation oil is low, the leakage amount of the operation oil from the hydraulic pump 32 is reduced as described above. In the examples, the rotational speed of the electric motor 31 is set to low, as shown in the right view of FIG. 5. This reduces excess supply of the operation oil to the door actuator 22 and the gear actuator 21, thereby making it possible to prevent a significant increase in the pressure of the door actuator 22, which is remarkable in the door open operation shown in the bottom left view of FIG. 5 (see a portion surrounded by the dotted line).

### DESCRIPTION OF REFERENCE CHARACTERS

- 1: EHA System for Raising/Lowering Landing Gear
- 11: Landing Gear
- 21: Gear Actuator (Hydraulic Actuator)
- 22: Door Actuator (Hydraulic Actuator)
- 31: Electric Motor
- 32: Hydraulic Pump
- 33: Hydraulic Circuit
- 34: Pressure Sensor
- 4: EHA Controller
- 41: Pressure Control Block
- 42: Motor Rotational Speed Control Block
- 43: Current Control Block

## Claims

1. An electro-hydrostatic actuator system for raising/lowering a landing gear (11) of an aircraft, the electro-hydrostatic actuator system comprising:
at least one hydraulic actuator (21, 22) configured to retract and extend the landing gear (11) of the aircraft;
a hydraulic circuit (33) connected to the hydraulic actuator (21, 22), and configured to supply and exhaust operation oil to and from the hydraulic actuator (21, 22);
a hydraulic pump (32) configured to raise a pressure of the operation oil to be supplied to the hydraulic actuator (21, 22) through the hydraulic circuit (33);
an electric motor (31) connected to the hydraulic pump (32), and configured to drive the hydraulic pump (32);
a controller (4) configured to control an operation of the electric motor (31) at receiving a command to retract or extend the landing gear (11); and
a sensor (34) detecting a discharge pressure of the hydraulic pump (32), wherein
the controller (4), when receiving the command to retract or extend the landing gear (11), feeds back the discharge pressure detected by the sensor (34), and controls the operation of the electric motor (31) such that the discharge pressure of the hydraulic pump (32) reaches a target discharge pressure, **characterised in that**
the controller (4) includes:
a pressure control block (41) including a feedback loop in which the pressure control block (41) receives a pressure command of the operation oil to be supplied to the hydraulic actuator (21,22), and a feedback signal of the discharge pressure detected by the sensor (34) to output a rotational speed command of the electric motor (31) such that the discharge pressure of the hydraulic pump (32) reaches a target discharge pressure associated with the pressure command;
a motor rotational speed control block (42) including a feedback loop in which the motor rotational speed control block (42) receives the rotational speed command from the pressure control block (41), and a rotational speed feedback signal of the electric motor (31) to output a supply current command of the electric motor (31) such that the rotational speed of the electric motor (31) reaches a target rotational speed associated with the rotational speed command; and
a current control block (43) including a feedback loop in which the current control block (43) receives the supply current command from the motor rotational speed control block (42), and a supply current feedback signal to the electric motor (31) to supply the electric motor (31) with a current such that the current reaches a target supply current associated with the supply current command.

## Patentansprüche

1. Elektro-hydrostatisches Aktuatorsystem zum Heben/Senken eines Fahrwerks (11) eines Flugzeugs, das elektro-hydrostatische Aktuatorsystem umfassend:
zumindest einen hydraulischen Aktuator (21, 22), der konfiguriert ist, das Fahrwerk (11) des Flugzeugs einzufahren und auszufahren;
einen hydraulischen Kreislauf (33), der mit dem hydraulischen Aktuator (21, 22) verbunden ist und konfiguriert ist, dem hydraulischen Aktuator (21, 22) Betriebsöl zuzuleiten und aus diesem auszustoßen;
eine hydraulische Pumpe (32), die konfiguriert ist, einen Druck des Betriebsöls zu erhöhen, das durch den hydraulischen Kreislauf (33) dem hydraulischen Aktuator (21, 22) zuzuleiten ist;
einen Elektromotor (31), der mit der hydraulischen Pumpe (32) verbunden ist und konfiguriert ist, die hydraulische Pumpe (32) anzutreiben;
eine Steuerung (4), die konfiguriert ist, einen Betrieb des Elektromotors (31) beim Empfangen eines Befehls zu steuern, das Fahrwerk (11) einzufahren oder auszufahren; und
einen Sensor (34), der einen Entladungsdruck der hydraulischen Pumpe (32) erfasst, wobei
die Steuerung (4), wenn sie den Befehl empfängt, das Fahrwerk (11) einzufahren oder auszufahren, den Entladungsdruck, der durch den Sensor (34) erfasst wird, rückmeldet und den Betrieb des Elektromotors (31) steuert, sodass der Entladungsdruck der hydraulischen Pumpe (32) einen Zielentladungsdruck erreicht, **dadurch gekennzeichnet, dass**
die Steuerung (4) enthält:
einen Drucksteuerblock (41), der eine Feedbackschleife enthält, in der der Drucksteuerblock (41) einen Druckbefehl für das Betriebsöl, das dem hydraulischem Aktuator (21,22) zuzuleiten ist, und ein Rückmeldungssignal des Entladungsdrucks, der durch den Sensor (34) erfasst wird, empfängt, um einen Drehgeschwindigkeitsbefehl des Elektromotors (31) auszugeben, sodass der Entladungsdruck der hydraulischen Pumpe (32) einen Zielentladungsdruck erreicht, der mit dem Druckbefehl verknüpft ist;
einen Motordrehgeschwindigkeitssteuerblock (42), der eine Rückmeldungsschleife enthält, in der der Motordrehgeschwindigkeitssteuerblock (42) den Drehgeschwindigkeitsbefehl vom Drucksteuerblock (41), und ein Drehgeschwindigkeitsrückmeldungssignal des Elektromotors (31) empfängt, um einen Zuleitungsstrombefehl des Elektromotors (31) auszugeben, sodass die Drehgeschwindigkeit des Elektromotors (31) eine Zieldrehgeschwindigkeit erreicht, die mit dem Drehgeschwindigkeitsbefehl verknüpft ist; und
einen Stromsteuerblock (43), der eine Rückmeldungsschleife enthält, in der der Stromsteuerblock (43) den Zuleitungsstrombefehl vom Motordrehgeschwindigkeitssteuerblock (42) und ein Zuleitungsstromrückmeldungssignal an den Elektromotor (31) empfängt, um dem Elektromotor (31) Strom zuzuleiten, sodass der Strom einen Zielversorgungsstrom erreicht, der mit dem Versorgungsstrombefehl verknüpft ist.

## Revendications

1. Système d'actionneur électro-hydrostatique pour soulever/abaisser un train d'atterrissage (11) d'un aéronef, le système d'actionneur électro-hydrostatique comprenant :
au moins un actionneur hydraulique (21, 22) configuré pour rentrer et sortir le train d'atterrissage (11) de l'aéronef ;
un circuit hydraulique (33) relié à l'actionneur hydraulique (21, 22), et configuré pour fournir une huile de fonctionnement à l'actionneur hydraulique (21, 22) et l'évacuer depuis celui-ci ;
une pompe hydraulique (32) configurée pour augmenter une pression de l'huile de fonctionnement devant être fournie à l'actionneur hydraulique (21, 22) par le biais du circuit hydraulique (33) ;
un moteur électrique (31) connecté à la pompe hydraulique (32), et configuré pour entraîner la pompe hydraulique (32) ;
un contrôleur (4) configuré pour contrôler un fonctionnement du moteur électrique (31) à réception d'une commande de rentrée ou sortie du train d'atterrissage (11) ; et
un capteur (34) détectant une pression de décharge de la pompe hydraulique (32), dans lequel
le contrôleur (4), à réception de la commande de rentrée ou sortie du train d'atterrissage (11), renvoie la pression de décharge détectée par le capteur (34), et contrôle le fonctionnement du moteur électrique (31) de telle sorte que la pression de décharge de la pompe hydraulique (32) atteigne une pression de décharge cible, **caractérisé en ce que** le contrôleur (4) comporte :
un bloc de contrôle de pression (41) comportant une boucle de réaction dans laquelle le bloc de contrôle de pression (41) reçoit une commande de pression de l'huile de fonctionnement devant être fournie à l'actionneur hydraulique (21, 22), et un signal de réaction de la pression de décharge détectée par le capteur (34) pour produire en sortie une commande de vitesse de rotation du moteur électrique (31) de telle sorte que la pression de décharge de la pompe hydraulique (32) atteigne une pression de décharge cible associée à la commande de pression ;
un bloc de contrôle de vitesse de rotation de moteur (42) comportant une boucle de réaction dans laquelle le bloc de contrôle de vitesse de rotation de moteur (42) reçoit la commande de vitesse de rotation du bloc de contrôle de pression (41), et un signal de réaction de vitesse de rotation du moteur électrique (31) pour produire en sortie une commande de courant d'alimentation du moteur électrique (31) de telle sorte que la vitesse de rotation du moteur électrique (31) atteigne une vitesse de rotation cible associée à la commande de vitesse de rotation ; et
un bloc de contrôle de courant (43) comportant une boucle de réaction dans laquelle le bloc de contrôle de courant (43) reçoit la commande de courant d'alimentation du bloc de contrôle de vitesse de rotation de moteur (42), et un signal de réaction de courant d'alimentation destiné au moteur électrique (31) pour alimenter le moteur électrique (31) avec un courant de telle sorte que le courant atteigne un courant d'alimentation cible associé à la commande de courant d'alimentation.
